# EUROPÄISCHE PATENTSCHRIFT

(11) **EP 2 593 512 B1**
(45) Veröffentlichungstag und Bekanntmachung des Hinweises auf die Patenterteilung: **20.04.2016**
(21) Anmeldenummer: 11729605.3
(22) Anmeldetag: 27.06.2011
(51) Int. Cl.: C08L 51/00, C08L 25/12, C08K 5/3415, C08K 5/3435, C08K 5/3492

(54) **STABILISIERTE ACRYLNITRIL/STYROL/ACRYLESTER FORMMASSEN**
STABILIZED ACRYLONITRILE/STYRENE/ACRYLIC ESTER MOLDING COMPOSITIONS
MATIÈRES À MOULER ACRYLONITRILE/STYRÈNE/ESTER ACRYLIQUE STABILISÉES

(30) Priorität: 18.01.2011 EP 11151249; 12.07.2010 EP 10169245; 12.07.2010 EP 10169243; 12.07.2010 EP 10169250; 12.07.2010 EP 10169257
(43) Veröffentlichungstag der Anmeldung: 22.05.2013
(73) Patentinhaber: INEOS Styrolution Europe GmbH, 60325 Frankfurt am Main (DE)
(72) Erfinder: MINKWITZ, Rolf, 68167 Mannheim (DE)
(74) Vertreter: Jacobi, Markus Alexander
(86) Internationale Anmeldenummer: PCT/EP2011/060723
(87) Internationale Veröffentlichungsnummer: WO 2012/007268

(56) Entgegenhaltungen:
- WO-A1-2008/031719
- DE-A1- 10 316 198
- US-A- 4 957 953
- DATABASE WPI Week 200508 Thomson Scientific, London, GB; AN 2005-068390 XP002661791, & JP 2004 346237 A (UMG ABS KK) 9. Dezember 2004 (2004-12-09)
- DATABASE WPI Week 201037 Thomson Scientific, London, GB; AN 2010-F96426 XP002661790, & CN 101 709 133 A (SUZHOU XUGUANG POLYMER CO LTD) 19. Mai 2010 (2010-05-19)

## Beschreibung

Die vorliegende Erfindung betrifft thermoplastische Formmassen enthaltend Styrolcopolymere und schlagzäh-modifizierender Propfkautschuke ohne olefinische Doppelbindung in der Kautschukphase.

Stabilisierte thermoplastische Formmassen unterschiedlichster Art sind bekannt und aufgrund ihres für viele Anwendungen günstigen Eigenschaftsprofils, insbesondere ihrer guten Witterungsbeständigkeit, breit einsetzbar.

Beispielsweise werden in WO-A-2008/031719 stabilisierte Formassen offenbart, die neben einem Pfropfcopolymerisat auf Basis von (Meth)acrylaten oder Olefinen ein dotierte TiO₂ enthalten. In den Beispielen dieser Schrift werden acrylatkautschukmodifizierte vinylaromatische Copolymere (sogenannte "ASA" = Acrylnitril/Styrol/Acrylester) eingesetzt, die als weitere Stabilisatoren eine Verbindung gemäß Formel (I) der vorliegenden Anmeldung und ein spezielles Benzotriazol enthalten. Nachteilig an dieser Ausführungsform ist die reduzierte mult-axiale Zähigkeit schon vor der Bewitterung, die mit zunehmender Bewitterung weiter abnimmt.

Aus der US-A-4,692,486 sind Stabilisatormischungen enthaltend Verbindungen der Formeln (I) und (III) der vorliegenden Anmeldung für Polypropylen, Polyurethan und Polystyrol bekannt, wobei die eingesetzten Mengen der einzelnen Stabilisatorkomponenten kleiner oder gleich 0,1 Gew.-% ist.

Die DE-A-103 16 198 offenbart Stabilisatorgemische für die unterschiedlichsten Arten von thermoplastischen Polymeren, exemplarisch hervorgehoben wird Polypropylen. Bei den Stabilisatorgemischen handelt es sich um Dreistoffgemische. Für die drei Komponenten dieses Stabilisatorgemischs werden jeweils eine Vielzahl möglicher generischer und spezieller Verbindungen beschrieben. Als lediglich eine von vielen Möglichkeiten werden auch Stabilisatorgemische beschrieben, die auch Verbindungen der Formeln (I), (II) und (III) der vorliegenden Anmeldung enthalten. Jede der drei Stabilisatorkomponenten kann dabei bevorzugt in Mengen von 0,05 bis 1 Gew.-%, bezogen auf das organische Material, vorliegen. Nachteilig an dieser Ausführungsform ist die starke Abnahme der mult-axialen Zähigkeit während der Bewitterung.

Der vorliegenden Erfindung lag daher die Aufgabe zugrunde, verbesserte Formmassen auf der Basis von Acrylnitril/Styrol/Acrylester Formmassen bereitzustellen.

Demgemäß wurden neue und verbesserte Thermoplastische Formmasse, enthaltend:
a) 3 bis 94,6 Gew.-% eines oder mehrerer Styrolcopolymere als Komponente A, dadurch gekennzeichnet, dass man als Komponente A ein Copolymerisat aus Acrylnitril, Styrol und/oder a-Methylstyrol, Phenylmaleinimid, Methacrylsauremethylester oder deren Mischungen einsetzt,
b) 5 bis 95,2 Gew.-% eines oder mehrerer schlagzäh-modifizierender Komponente olefinische Doppelbindung in der Kautschukphase als B, dadurch gekennzeichnet, dass der Quellungsindex der. Komponente B in Toluol 6 bis 20 betragt, und dadurch gekennzeichnet, dass der mittlereTeilchendurchmesser von Komponente B, gemessen mittels HDC,zwischen 50 bis 1200 nm liegt,
c) 0,2 bis 0,9 Gew.-% einer Verbindung der Formel (I) als Komponente C: 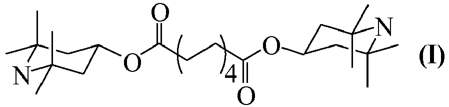
d) 0 bis 0,9 Gew.-% eines Gemisches der Formel (II) als Komponente D: 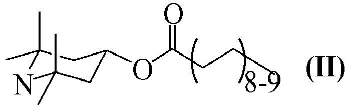
e) 0 bis 0,5 Gew.-% einer Verbindung der Formel (III) als Komponente E: 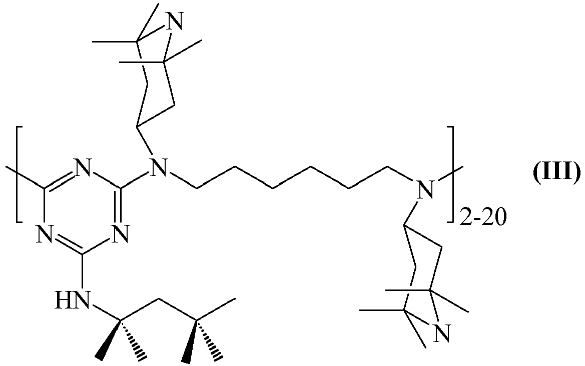 oder 0 bis 0,5 Gew.-% einer Verbindung der Formel (IV): 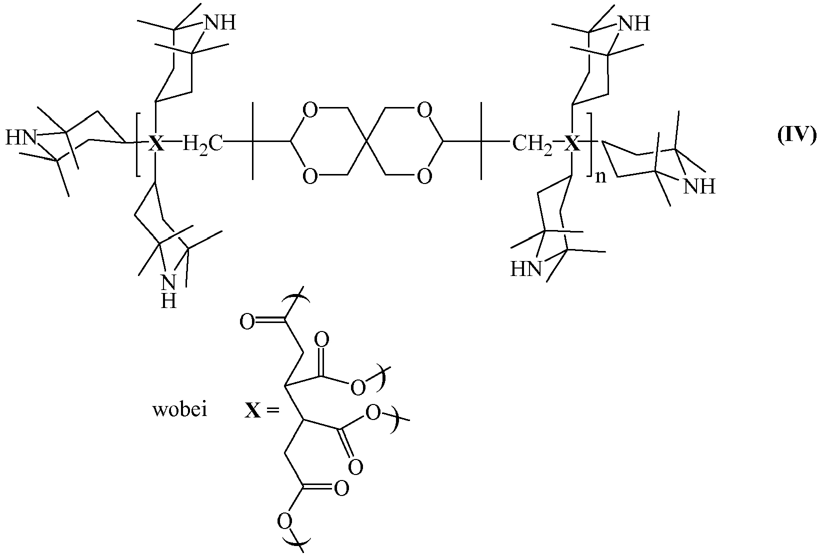 oder 0 bis 0,5 Gew.-% einer Verbindung der Formel (V): 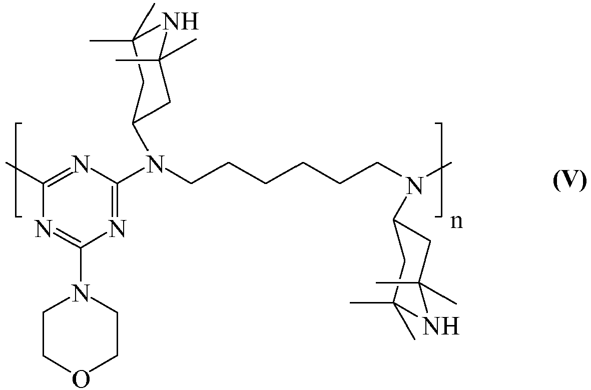 oder 0 bis 0,5 Gew.-% einer Verbindung der Formel (VI): 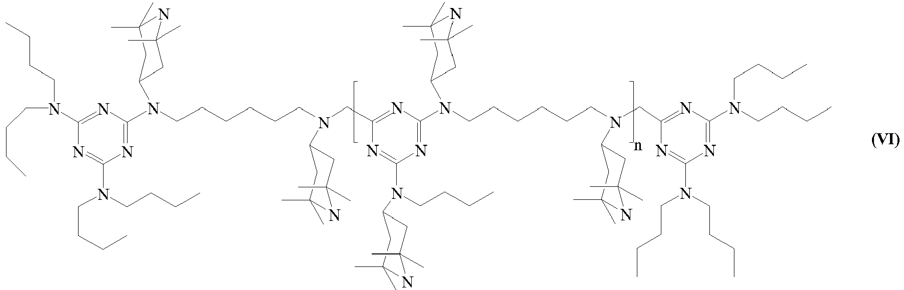
f) 0 bis 10 Gew.-% eines oder mehrerer Zusatzstoffe, die von den Komponenten C,D und E verschieden sind, als Komponente F, und
g) 0 bis 40 Gew.-% faser- oder teilchenförmiger Füllstoffe als Komponente G,
mit der Maßgabe, wenn Komponente D 0 Gew.-% beträgt (also keine Komponente D vorhanden ist), die Komponente E 0,01 bis 0,5 Gew.-%, bevorzugt 0,1 bis 0,5 Gew.-%, besonders bevorzugt 0,2 bis 0,5 Gew.-% eine oder mehrere der Verbindungen III, IV, V oder val beträgt, wobei die Gew.-% jeweils auf das Gesamtgewicht der Komponenten A bis G bezogen sind und zusammen 100 Gew.-% ergeben, gefunden.

Weiterhin wurden Verfahren zur Herstellung dieser Formmassen, deren Verwendung zur Herstellung von Folien, Formkörpern oder Fasern sowie diese Folien, Formkörper oder Fasern selbst gefunden.

Durch die erfindungswesentliche spezielle Auswahl jeder einzelnen Komponente und ihrer speziellen Mengenanteile weisen die erfindungsgemäßen Formmassen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die erfindungsgemäßen Gegenstände, Verfahren und Verwendungen werden im Folgenden beschrieben.

Die erfindungsgemäßen Formmassen enthalten, bezogen auf das Gesamtgewicht der Komponenten A, B, C, D, E, F und G welches insgesamt 100 Gew.-% ergibt,
a) 3 bis 94,6 Gew.-%, bevorzugt 10 bis 75 Gew.-%, besonders bevorzugt 20 bis 70 Gew.-% der Komponente A,
b) 5 bis 95,2 Gew.-%, bevorzugt 10 bis 50 Gew.-%, besonders bevorzugt 15 bis 40 Gew.-% der Komponente B,
c) 0,2 bis 0,9 Gew.-%, bevorzugt 0,2 bis 0,7 Gew.-%, besonders bevorzugt 0,3 bis 0,6 Gew.-% der Komponente C,
d) 0 bis 0,9 Gew.-%, bevorzugt 0,2 bis 0,7 Gew.-%, besonders bevorzugt 0,2 bis 0,4 Gew.% der Komponente D, mit der Maßgabe, wenn Komponente D 0 Gew.-% beträgt (also keine Komponente D vorhanden ist), die Komponente E 0,01 bis 0,5 Gew.-%, bevorzugt 0,1 bis 0,5 Gew.-%, besonders bevorzugt 0,2 bis 0,5 Gew.-% einer der Verbindungen III, IV, V oder VI beträgt,
e) 0 bis 0,5 Gew.-%, bevorzugt 0,1 bis 0.5 Gew.-%, besonders bevorzugt 0,2 bis 0,4 Gew.% der Komponente E
f) 0 bis 10 Gew.-%, bevorzugt 0 bis 8 Gew.-%, besonders bevorzugt 0 bis 5 Gew.-% der Komponente F, und
g) 0 bis 40 Gew.-%, bevorzugt 0 bis 25 Gew.-%, besonders bevorzugt 0 bis 15 Gew.-% der Komponente G.

Das Gewichtsverhältnis Komponente C zu Komponente D liegt in der Regel im Bereich von 4:1 bis 0,25:1, bevorzugt 4:1 bis 1:1, besonders bevorzugt 3:1 bis 1:1.

Das Gewichtsverhältnis Komponente D zu E liegt in der Regel im Bereich von 2:1 bis 0,5:1.

### Komponente A:

Als Komponente A enthalten die erfindungsgemäßen thermoplastischen Formmassen ein oder mehrere Styrolcopolymere. Dabei können in den Copolymeren neben Styrol beliebige geeignete Comonomere vorliegen. Bevorzugt handelt es sich um ein Styrol-Acrylnitril-Copolymer, alpha-Methylstyrol-Acrylnitril-Copolymer oder N-Phenylmaleinimid-Acrylnitril-Copolymer.

Als Komponente A sind grundsätzlich alle dem Fachmann bekannten und in der Literatur beschriebenen Styrol-Acrylnitril-Copolymere, α-Methylstyrol-Acrylnitril-Copolymere, N-Phenylmaleinimid-Acrylnitril-Copolymer oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 80 Gew.%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind aufgebaut aus 50 bis 90 Gew.-%, bevorzugt 60 bis 80 Gew.%, insbesondere 65 bis 78 Gew.-%, N-Phenylmaleinimid und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere, α-Methylstyrol-Acrylnitril-Copolymere und N-Phenylmaleinimid-Acrylnitril-Copolymere untereinander oder mit Polymethylmethacrylat. Das Polymethylmethacrylat kann dabei Alkyl-oder Arylmethacrylate in 0-10 Gew-% enthalten.

Als oben genannte weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach bekannten Methoden herstellen. Sie lassen sich z. B. durch radikalische Polymerisation, insbesondere durch Emulsions-, Suspensions-, Lösungs- oder Massepolymerisation herstellen.

### Komponente B:

Die Komponente B enthält, besteht bevorzugt aus einen oder mehreren schlagzähmodifizierenden Propfkautschuken ohne olefinische Doppelbindung in der Kautschukphase. Es handelt sich bevorzugt um kautschukelastische Pfropfcopolymerisate von vinylaromatischen Verbindungen, insbesondere Styrol, und Vinylcyaniden, insbesondere Acrylnitril, auf Polyalkylacrylatkautschuken. Die Komponente B hat in der Regel einen Quellungsindex von 6 bis 20, bevorzugt von 7 bis 18 und besonders bevorzugt von 7 bis 15. Ohne olefinische Doppelbindung bedeutet in diesem Zusammenhang, dass keine Komponente mit einer olefinischen Doppelbindung eingesetzt wird und die Komponente B in der Regel 0 bis maximal 0,5 Gew.-%, bevorzugt 0 bis 0,2 Gew.-%, besonders bevorzugt 0 bis 0,1 Gew.-%, insbesondere 0 bis 0,01 Gew.-%,olefinische Doppelbindungen enthält.

In einer bevorzugten Ausführungsform ist das kautschukelastische Pfropfcopolymerisat B aufgebaut aus
- b₁: 1 bis 99 Gew.-%, vorzugsweise 55 bis 80 Gew.-%, insbesondere 55 bis 65 Gew.-%, einer teilchenförmigen Pfropfgrundlage B1 mit einer Glasübergangstemperatur unterhalb von 0°C, und
- b₂: 1 bis 99 Gew.-%, vorzugsweise 20 bis 45 Gew.-%, insbesondere 35 bis 45 Gew.-%, einer Pfropfauflage B2 aus den Monomeren,
bezogen auf B.

### Komponente B1 ist dabei aufgebaut aus

- b₁₁: 60 bis 99,99 Gew.-%, vorzugsweise 80 bis 99,9 Gew.-%, mindestens eines C₁₋₈-Alkylesters der Acrylsäure, vorzugsweise C_{4 bis 8}-Alkylacrylaten, insbesondere n-Butylacrylat und/oder 2-Ethylhexylacrylat, als Komponente B-11,
- b₁₂: 0,01 bis 20 Gew.-%, vorzugsweise 0,1 bis 5 Gew.-%, mindestens eines polyfunktionellen vernetzenden Monomeren, vorzugsweise Butylendiacrylat, Divinylbenzol, Butandioldimethacrylat, Trimethylolpropantri(meth)acrylat, Diallylmethacrylat, Diallylmaleat, Diallylfumarat, Triallylmethacrylat, Triallylisocyanurat, besonders bevorzugt Diallylphthalat, Allylmethacrylat und/oder Dihydrodicyclopentadienylacrylat ("DCPA") als Komponente B-12, und
- b₁₃: 0 bis 39,99 Gew.-%, vorzugsweise 0 bis 19,9 Gew.-%, harte Polymere bildenden Monomeren, wie Vinylacetat, (Meth)acrylnitril, Styrol, substituiertes Styrol, Methylmethacrylat oder Vinylether, als Komponente B-13.

### Komponente B2 ist dabei aufgebaut aus

- b₂₁: 40 bis 100 Gew.-%, vorzugsweise 65 bis 85 Gew.-% eines vinylaromatischen Monomeren, insbesondere des Styrols, α-Methylstyrols oder N-Phenylmaleinimids als Komponente B-21 und
- b₂₂: 0 bis 60 Gew.-%, vorzugsweise 15 bis 35 Gew.-% eines polaren, copolymerisierbaren, ethylenisch ungesättigten Monomeren, insbesonders des Acrylnitrils, (Meth)acrylsäureesters oder Methacrylnitrils als Komponente B-22.

Bei der Komponente B handelt es sich um ein Pfropfcopolymerisat umfassend eine Pfropfgrundlage B1 und mindestens eine Pfropfauflage B2. Das Pfropfcopolymerisat B kann einen mehr oder weniger perfekt ausgeprägten Kern-Schale-Aufbau aufweisen (Pfropfgrundlage B1 stellt den Kern dar, die Pfropfauflage B2 die Schale), es ist aber auch möglich, dass die Pfropfauflage B2 die Pfropfgrundlage B1 nur unvollständig umschließt bzw. bedeckt oder aber auch die Pfropfauflage B2 die Pfropfgrundlage B1 ganz oder teilweise durchdringt.

Die Pfropfgrundlage B1 kann in einer Ausführungsform der Erfindung einen sogenannten Kern enthalten, der aus einem weichen kautschukelastischen Polymerisat oder einem harten Polymerisat gebildet werden kann; in den Ausführungsformen, in denen die Pfropfgrundlage B1 einen Kern enthält, wird der Kern bevorzugt aus einem harten Polymerisat, insbesondere Polystyrol oder einem Styrolcopolymer, gebildet. Solche Pfropfkerne und deren Herstellung sind dem Fachmann bekannt und beispielsweise in EP-A 535456 und EP-A 534212 beschrieben. Selbstverständlich ist es auch möglich, zwei oder mehr Pfropfgrundlagen B1 einzusetzen, die sich beispielsweise in ihrer Zusammensetzung oder in der Teilchengröße voneinander unterscheiden. Solche Mischungen unterschiedlicher Pfropfgrundlagen können nach dem Fachmann an sich bekannten Methoden hergestellt werden, beispielsweise indem zwei oder mehr Kautschuklatices separat hergestellt und die entsprechenden Dispersionen vermischt werden, aus den entsprechenden Dispersionen separat die Feucht-Kautschuke gefällt und beispielsweise in einem Extruder gemischt werden oder die entsprechenden Dispersionen separat vollständig aufgearbeitet und die erhaltenen Pfropfgrundlagen anschließend vermischt werden.

Das Pfropfcopolymerisat B kann zwischen der Pfropfgrundlage B1 und der Pfropfauflage B2 ein oder mehrere weitere Pfropfauflagen bzw. -hüllen oder -schalen aufweisen -beispielsweise mit anderen Monomerzusammensetzungen-, bevorzugt weist das Pfropfcopolymer B aber außer der Pfropfauflage B2 keine weiteren Pfropfauflagen bzw. -hüllen oder -schalen auf.

Das Polymerisat der Pfropfgrundlage B1 hat üblicherweise eine Glasübergangstemperatur unter 0°, vorzugsweise eine Glasübergangstemperatur unter (-20)°C, insbesondere unter (-30)°C. Ein Polymerisat aus den die Pfropfauflage B2 bildenden Monomeren besitzt üblicherweise eine Glasübergangstemperatur von mehr als 30°C, insbesondere mehr als 50°C (jeweils ermittelt nach DIN 53765).

Die Pfropfcopolymerisate B haben üblicherweise eine mittlere Teilchengröße d₅₀ von 50 bis 1200 nm, bevorzugt 50 bis 800 nm, besonders bevorzugt 50 bis 600 nm. Diese Teilchengrößen können erzielt werden, wenn man als Pfropfgrundlage B1 mittlere Teilchengrößen d₅₀ von 50 bis 1000 nm, bevorzugt 50 bis 700 nm besonders bevorzugt 50 bis 500 nm verwendet. Gemäß einer Ausführungsform der Erfindung ist die Teilchengrößenverteilung monomodal. Gemäß einer weiteren erfindungsgemäßen Ausführungsform ist die Teilchengrößenverteilung der Komponente B bimodal, wobei 60 bis 90 Gew.-% eine mittlere Teilchengröße von 50 bis 200 nm und 10 bis 40 Gew.-% eine mittlere Teilchengröße von 200 bis 800 nm aufweisen, bezogen auf das Gesamtgewicht der Komponente B. Als mittlere Teilchengröße bzw. Teilchengrößenverteilung werden die aus der integralen Massenverteilung bestimmten Größen angegeben. Bei diesen und den weiteren im Rahmen der vorliegenden Erfindung genannten mittleren Teilchengrößen handelt es sich in allen Fällen um das Gewichtsmittel der Teilchengrößen, wie sie mittels HDC gemessen wurden (W. Wohlleben and H. Schuch in Measurement of Particle Size Distribution of Polymer Latexes, 2010, Editors: Luis M. Gugliotta and Jorge R. Vega, p. 130 - 153).

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI des Pfropfcopolymerisates B der erfindungsgemäßen Formmassen im Bereich QI = 10 bis 60. Bevorzugt wird ein QI von 7 bis 18 besonders bevorzugt von 7 bis 15 in Toluol.

Die Pfropfcopolymerisate B können durch Pfropfpolymerisation der Komponenten B-21 und B-22 auf mindestens eine der vorstehend aufgeführten Pfropfgrundlagen B1 hergestellt werden. Geeignete Herstellverfahren für Pfropfcopolymerisate B sind die Emulsions-, Lösungs-, Masse-oder Suspensionspolymerisation. Bevorzugt werden die Pfropfcopolymerisate B durch radikalische Emulsionspolymerisation hergestellt in Gegenwart von Latices der Komponente B1 bei Temperaturen von 20 bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C. Geeignete Polymerisationsverfahren sind beschrieben in WO-A-02/10222, DE-A-28 26 925, DE-A-31 49 358 und DE-C 12 60 135. Der Aufbau der Pfropfauflagen erfolgt vorzugsweise im Emulsionspolymerisationsverfahren, wie es beschrieben ist in DE-A- 32 27 555, DE-A-31 49 357, DE-A-31 49 358, DE-A-34 14 118. Das definierte Einstellen der mittleren Teilchengrößen von 50 bis 1200 nm erfolgt bevorzugt nach den Verfahren, die beschrieben sind in der DE-C-12 60 135 und DE-A 28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US-A-5 196 480. Gemäß dem in der DE-C-12 60 135 beschriebenen Verfahren wird zunächst die Pfropfgrundlage B1 hergestellt, indem der oder die gemäß einer Ausführungsform der Erfindung verwendeten Acrylsäureester B-11 und die als Vernetzungs- und/oder Pfropfagenz wirkende Verbindung B-12, ggf. zusammen mit den weiteren monoethylenisch ungesättigten Monomeren B-13, in wäßriger Emulsion in an sich bekannter Weise bei Temperaturen zwischen 20 und 100°C, vorzugsweise zwischen 50 und 90°C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Pfropfgrundlage B1 eingesetzten Monomeren, eingesetzt. Im allgemeinen wird bei einem Gewichtsverhältnis von Wasser zu Monomeren von 4 : 1 bis 0,6 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage B1 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden. Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureesterpolymerisats B1 einen d₅₀-Wert im Bereich von 50 bis 1000 nm, vorzugsweise 50 bis 700 nm, besonders bevorzugt 50 bis 500 nm, besitzt. Die Teilchengrößenverteilung des Latex soll dabei vorzugsweise eng mit einem Polydispersitätsindex < 0.75 sein, entsprechend W. Mächtle and L. Börger, Analytical Ultracentrifugation of Polymers and Nanoparticles, (Springer, Berlin, 2006). ISBN 3-540-23432-2.

Zur Herstellung des Pfropfpolymerisats B kann in einem nächsten Schritt in Gegenwart des so erhaltenen Latex des vernetzten Acrylsäureester-Polymerisats B1 gemäß einer Ausführungsform der Erfindung ein Monomerengemisch aus Komponente B-21, bevorzugt Styrol, Komponente B-22, bevorzugt Acrylnitril und/oder eines (Meth)acrylsäureesters, und ggf. weiterer ungesättigter Monomere polymerisiert werden. Dabei können die Monomeren B-21, B-22 und ggf. weitere ungesättigte Monomere einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende vernetzte Acrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage B1, wobei, falls notwendig, weiterer Emulgator und Initiator zugegeben werden kann. Das gemäß einer Ausführungsform der Erfindung aufzupfropfende Monomerengemisch kann dem Reaktionsgemisch auf einmal, absatzweise in mehreren Stufen -beispielsweise zum Aufbau mehrerer Pfropfauflagen- oder vorzugsweise kontinuierlich während der Polymerisation zugegeben werden. Die Pfropfcopolymerisation des Gemisches der Komponenten B-21, B-22 und ggf. weiterer Monomerer in Gegenwart des vernetzenden Acrylsäureesterpolymerisats B1 wird so geführt, dass ein Pfropfgrad von 10 bis 70 Gew.-%, vorzugsweise 20 bis 60 Gew.-%, insbesondere 30 bis 55 Gew.-%, bezogen auf das Gesamtgewicht der Komponente B, im Pfropfcopolymerisat B resultiert. Da die Pfropfausbeute bei der Pfropfcopolymerisation nicht 100% beträgt, sollte vorteilhafter Weise eine etwas größere Menge des Monomerengemisches aus B-21, B-22 und ggf. weiterer Monomerer bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats B ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 bis 333). Bei der Emulsions-Pfropfcopolymerisation entstehen im allgemeinen 5 bis 15 Gew.-%, bezogen auf das Pfropfcopolymerisat, an freiem, ungepfropftem Copolymerisat der Komponenten B-21, B-22 und ggf. der weiteren Monomere. Der Anteil des Pfropfcopolymerisats B in dem bei der Pfropfcopolymerisation erhaltenen Polymerisationsprodukt kann beispielsweise nach der in US-A-2004/0006178 beschriebenen Methode ermittelt werden.

In weiteren Ausführungsformen der erfindungsgemäßen Verfahren kann die Herstellung der Pfropfgrundlage B1 in Gegenwart von Saatpartikeln erfolgen und/oder es kann nach der Herstellung der Pfropfgrundlage B1 und vor dem Aufbringen der Pfropfauflage B2 ein Agglomerationsschritt durchgeführt werden. Diese beiden Verfahrensoptionen sind dem Fachmann bekannt und/oder in der Literatur beschrieben, und werden beispielsweise gewählt, um Teilchengrößen und Teilchengrößenverteilungen gezielt einzustellen.

Saatpartikel haben in der Regel eine Teilchengröße d₅₀ von 10 bis 200 nm, bevorzugt 10 bis 180 nm, besonders bevorzugt 10 bis 160 nm. Es wird bevorzugt, Saatpartikel einzusetzen, die eine geringe Breite der Teilchengrößenverteilung haben. Darunter sind Saatpartikel besonders bevorzugt, die eine monomodale Teilchengrößenverteilung haben. Die Saatpartikel können grundsätzlich aus kautschukelastische Polymere bildenden Monomeren, beispielsweise 1,4-Butadien oder Acrylaten, aufgebaut sein, oder aus einem Polymeren, dessen Glasübergangstemperatur mehr als 0°C, bevorzugt mehr als 25°C beträgt, aufgebaut sein. Zu den bevorzugten Monomeren, auf denen diese Saatpartikel basieren, zählen vinylaromatische Monomere wie Styrol, ringsubstiuierte Styrole oder α-Methylstyrol, darunter bevorzugt Styrol, Acrylnitril, Alkylacrylsäure, Alkylacrylate, darunter bevorzugt n-Butylacrylat. Es kommen auch Mischungen aus zwei oder mehr, bevorzugt zwei der genanten Monomeren in Betracht. Ganz besonders bevorzugt sind Saatpartikel aus Polystyrol oder n-Butylacrylat. Die Herstellung derartiger Saatpartikel ist dem Fachmann bekannt oder kann nach an sich bekannten Methoden erfolgen. Bevorzugt werden die Saatpartikel durch partikelbildende heterogene Polymerisationsverfahren, bevorzugt durch Emulsionspolymerisation, erhalten. Die Saatpartikel werden erfindungsgemäß vorgelegt, wobei es möglich ist, die Saatpartikel zunächst separat herzustellen, aufzuarbeiten und dann einzusetzen. Es ist aber auch möglich, die Saatpartikel herzustellen und ihnen danach ohne vorherige Aufarbeitung die Monomermischung aus B-11, B-12 und ggf. B-13 zuzufügen.

Verfahren zur teilweisen oder vollständigen Agglomerisation der Pfropfgrundlage B1 sind dem Fachmann bekannt oder die Agglomerisation kann nach dem Fachmann an sich bekannten Methoden vorgenommen werden (siehe z.B. Keppler et al. Angew. Markomol. Chemie, 2, 1968 Nr. 20, Seite 1 bis 25). Die Agglomerisationsmethode ist im Prinzip nicht beschränkt. So können physikalische Verfahren wie Gefrier- oder Druckagglomerisationsverfahren verwendet werden. Es können aber auch chemische Methoden eingesetzt werden, um die Pfropfgrundlage zu agglomerisieren. Zu letzteren zählen die Zugabe von Elektroyten oder von anorganischen oder organischen Säuren. Bevorzugt wird die Agglomerisation mittels eines Agglomerisationspolymerisates vorgenommen. Als solche sind beispielsweise Polyethylenoxidpolymere, Polyvinylether oder Polyvinylalkohole zu nennen. Zu den geeigneten Agglomerisationspolymerisaten zählen des weiteren Copolymerisate die C₁- bis C₁₂- Alkylacrylate oder C₁- bis C₁₂- Methalkylacrylate und polare Comonomere wie Acrylamid, Methacrylamid, Ethacrylamid, n-Butylacrylamid, Maleinsäureamid oder (Meth)acrylsäure enthalten. Neben diesen Monomeren, können diese Copolymerisate aus weiteren Monomeren, darunter Dienen wie Butadien oder Isopren aufgebaut sein. Die Agglomerisationspolymerisate können einen mehrstufigen Aufbau aufweisen und z.B: einen Kern/Schale-Aufbau haben. Als Kern kommen z.B. Polyacrylate wie Polyethylacrylat und als Schale kommen Teilchen auf (Meth)alkylacrylaten und den genannten polaren Comonomeren in Betracht. Besonders bevorzugtes Agglomerisationspolymerisat ist ein Copolymerisat aus 92 bis 99 Gew.-% Ethylacrylat oder -methacrylat und 1 bis 8 Gew.-% (Meth)acrylamid und/oder (Meth)acrylsäuren. Die Agglomerisationspolymerisate werden in der Regel in Form einer Dispersion eingesetzt. Bei der Agglomeration werden in der Regel von 0,1 bis 5, vorzugsweise von 0,5 bis 3 Gew.-Teile der Agglomerisationspolymerisate auf 100 Gew.-Teile der Pfropfgrundlage eingesetzt.

Die erfindungsgemäßen Pfropfcopolymerisate B können so weiterverwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z.B., dass die Pfropfcopolymerisate B aus der Reaktionsmischung isoliert werden, z.B. durch Sprühtrocknung, Scherung oder durch Fällen mit starken Säuren oder mittels Nukelierungsmitteln wie anorganischen Verbindungen z.B. Magnesiumsulfat. Die in der Reaktionsmischung vorliegenden Pfropfcopolymerisate B können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Das Mischen der Komponenten A und B zur Herstellung der Formmasse kann nach jeder beliebigen Weise nach allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte B der Pfropfcopolymerisation können auch nur teilweise entwässert werden und als feuchte Krümel mit der Hartmatrix A vermischt werden, wobei dann während des Vermischens die vollständige Trocknung der Pfropfcopolymerisate B erfolgt.

### Komponente C:

Als Komponente C der erfindungsgemäßen Formmassen wird eine Verbindung der Formel (I) eingesetzt:

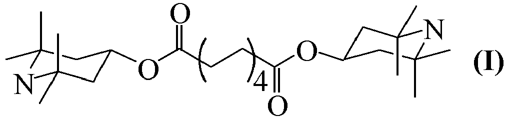

Dieses sterisch gehinderte Amin (CAS Nummer 52829-07-9) und seine Herstellung sind dem Fachmann bekannt und in der Literatur beschrieben (s. beispielsweise US-A-4 396 769 und den darin zitierten Literaturstellen). Vertrieben wird es von BASF SE unter der Bezeichnung Tinuvin^{®} 770.

### Komponente D:

Als Komponente D der erfindungsgemäßen Formmassen wird eine Verbindung der Formel (II) eingesetzt:

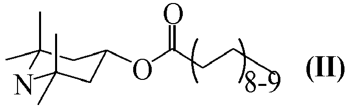

Dieses sterisch gehinderte Amin (CAS Nummer 167078-06-0) und seine Herstellung sind dem Fachmann bekannt und in der Literatur beschrieben (Carlsson et al., Can. Journal of Polymer Science, Polymer Chemistry Edition (1982), 20(2), 575-82). Vertrieben wird es von Cytec Industries unter der Bezeichnung Cyasorb^{®} 3853.

### Komponente E:

Als Komponente E der erfindungsgemäßen Formmassen kann eine Verbindung der Formel (III) eingesetzt werden:

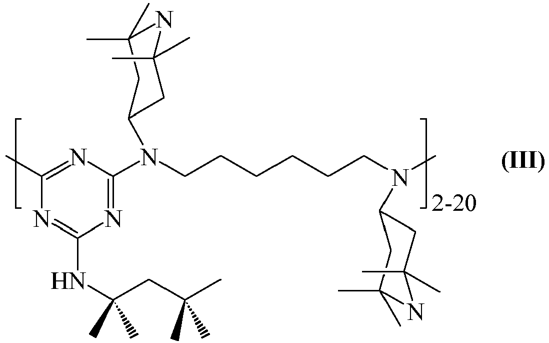

Dieses sterisch gehinderte Amin (CAS Nummer 71878-19-8) und seine Herstellung sind dem Fachmann bekannt und in der Literatur beschrieben (s. beispielsweise EP-A-93 693 und den darin zitierten Literaturstellen). Vertrieben wird es von BASF SE unter der Bezeichnung Chimassorb^{®} 944.

Als weitere Komponente E der erfindungsgemäßen Formmassen kann eine Verbindung der Formel (IV) eingesetzt werden:

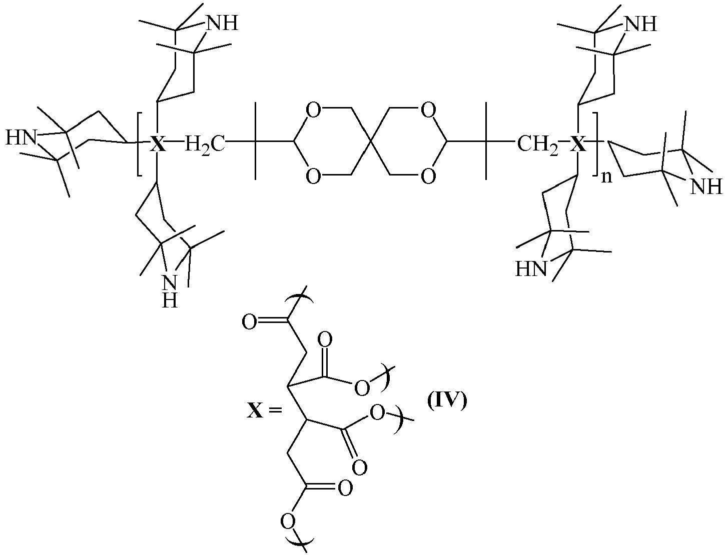

Dieses sterisch gehinderte Amin (CAS Nummer 101357-37-3) und seine Herstellung sind dem Fachmann bekannt und in der Literatur beschrieben (s. beispielsweise US-A-5 208 132 und den darin zitierten Literaturstellen). Vertrieben wird es von ADEKA unter der Bezeichnung Adeka Stab^{®} LA-68.

Als weitere Komponente E der erfindungsgemäßen Formmassen kann eine Verbindung der Formel (V) eingesetzt werden:

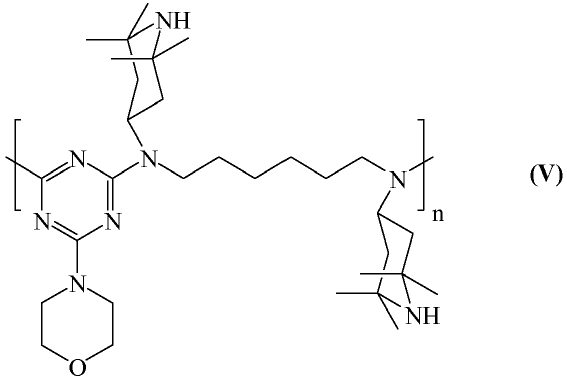

Dieses sterisch gehinderte Amin (CAS Nummer 82451-48-7) und seine Herstellung sind dem Fachmann bekannt und in der Literatur beschrieben (s. beispielsweise US-A-4 331 586 und den darin zitierten Literaturstellen). Vertrieben wird es von der Cytec Industries unter der Bezeichnung Cyasorb^{®} UV-3346.

Als weitere Komponente E der erfindungsgemäßen Formmassen kann eine Verbindung der Formel (VI) eingesetzt werden:

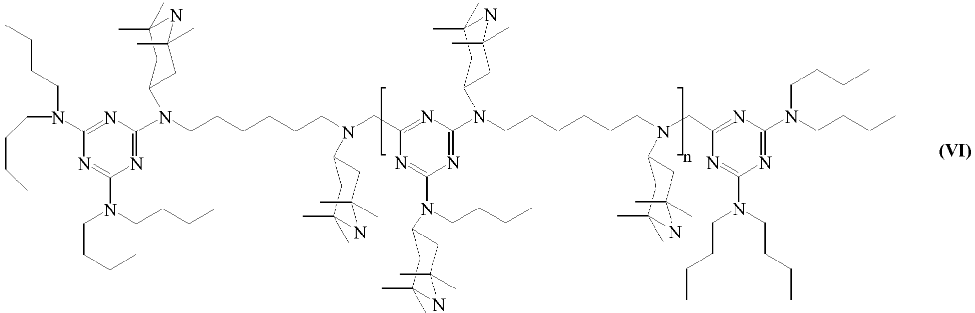

Dieses sterisch gehinderte Amin (CAS Nummer 192268-64-7) und seine Herstellung sind dem Fachmann bekannt und in der Literatur beschrieben (s. beispielsweise EP-A-782 994 und den darin zitierten Literaturstellen). Vertrieben wird es von BASF. unter der Bezeichnung Chimassorb^{®} 2020.

### Komponente F:

Neben den Komponenten A, B, C, D und E können die erfindungsgemäßen Formmassen einen oder mehrere, von den Komponenten C, D und E verschiedene Zusatzstoffe bzw. Additive, die für Kunststoffmischungen typisch und gebräuchlich sind, enthalten.

Als solche Zusatzstoffe bzw. Additive seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Als Komponente E geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen -sofern vorhanden - im Bereich von 0,05 bis 1 Gew.-% (bezogen auf das Gesamtgewicht der erfindungsgemäßen Formmassen).

Auch Siliconöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

### Komponente G:

Als Komponente G enthalten die erfindungsgemäßen Formmassen von den Komponenten C, D und E verschiedene faser- oder teilchenförmige Füllstoffe oder deren Mischungen. Dabei handelt es sich vorzugsweise um kommerziell erhältliche Produkte, beispielsweise Kohlenstofffasern und Glasfasern. Verwendbare Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern als auch Schnittglasfasern (staple) oder Rovings mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Neben den Komponenten A, B, C, D und ggf. E und F können die erfindungsgemäßen Formmassen weitere Polymere enthalten.

Die Herstellung der erfindungsgemäßen Formmassen aus den Komponenten kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten, z. B. bei Temperaturen im Bereich von 160 bis 400°C, bevorzugt von 180 bis 280°C, wobei die Komponenten, in einer bevorzugten Ausführungsform, zuvor aus den bei den jeweiligen Herstellschritten erhaltenen Reaktionsmischungen teilweise oder vollständig isoliert worden sind. Beispielsweise können die Pfropfcopolymerisate B als feuchte Krümel mit einem Granulat des vinylaromatischen Copolymers A vermischt werden, wobei dann während des Vermischens die vollständige Trocknung zu den beschriebenen Pfropfcopolymerisaten erfolgt. Die Komponenten können in jeweils reiner Form geeigneten Mischvorrichtungen, insbesondere Extrudern, bevorzugt Doppelschneckenextrudern, zugeführt werden. Es können aber auch einzelne Komponenten, beispielsweise A und B, zuerst vorgemischt und anschließend mit weiteren Komponenten A oder B oder anderen Komponenten, beispielsweise C und D, vermischt werden. Die Komponente A kann dabei als vorab separat hergestellte Komponente eingesetzt werden; es ist aber auch möglich, den Acrylatkautschuk und das vinylaromatische Copolymer unabhängig voneinander zu dosieren. In einer Ausführungsform wird zuerst ein Konzentrat, beispielsweise der Komponenten B und C in der Komponente A hergestellt (sogenannte Additiv-Batches oder Masterbatches) und anschließend mit den gewünschten Mengen der restlichen Komponenten vermischt. Die Formmassen können nach dem Fachmann bekannten Verfahren beispielsweise zu Granulaten, oder aber auch direkt zu beispielsweise Formkörpern verarbeitet werden.

Die erfindungsgemäßen Formmassen können zu Folien, Formkörpern oder Fasern verarbeitet werden. Diese Folien, Formkörpern oder Fasern sind insbesondere für den Einsatz im Außenbereich, d.h. unter Witterungseinfluß, geeignet.

Diese Folien, Formkörpern oder Fasern können nach den bekannten Verfahren der Thermoplastverarbeitung aus den erfindungsgemäßen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die erfindungsgemäßen Formmassen weisen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die Erfindung wird anhand der nachfolgenden Beispiele näher erläutert.

### Beispiele:

### Meßmethoden:

Als ein Maß für die Witterungsbeständigkeit wurde an Prüfkörpern (60 x 60 x 2mm, hergestellt nach ISO 294 in einem Familienwerkzeug, bei einer Massetemperatur von 260°C und einer Werkzeugtemperatur von 60°C) eine Bewitterung gemäß Xenontest nach ISO 4892/2, Verfahren A, außen, durchgeführt. Nach den in Tabelle 1 genannten Bewitterungszeiten erfolgten die Messung des Oberflächenglanzes aller Proben nach DIN 67530 bei 60° Betrachtungswinkel.

### Durchstoß (multi-axiale Zähigkeit) [Nm]:

Als weiteres Maß für die Witterungsbeständigkeit wurde der Durchstoß an Plättchen (60 x 60 x 2mm, hergestellt nach ISO 294 in einem Familienwerkzeug, bei einer Massetemperatur von 260°C und einer Werkzeugtemperatur von 60°C) nach ISO 6603-2 ermittelt.

### Einsatzstoffe

Komponenten oder Produkte mit vorangestelltem "V-" sind nicht erfindungsgemäß und dienen zum Vergleich.

Als Komponenten A und B (bzw. V-A zum Vergleich) wurden eingesetzt:
- AB-i:: ein acrylatkautschukmodifiziertes Styrol-Acrylnitril-Copolymer (ASA), dessen Synthese in der EP-A-450 485 als erfindungsgemäßes Beispiel beschrieben ist, wobei Komponente A aus EP-A-450 485 zu 25 Teilen vorliegt, Komponente BI zu 10 Teilen, sowie Komponente C dementsprechend zu 65 Teilen. Komponente A wurde anstelle von 1.6 Teilen Tricyclodecenylacrylat mit 2 Teilen Dihydodicyclopentadienylacrylat (CAS Nummer 12542-30-2) und Komponente BI anstelle von anstelle von 1.0 Teilen Tricyclodecenylacrylat auch mit 2 Teilen Dihydodicyclopentadienylacrylat synthetisiert. Es ergaben sich Quellungsindices von 11,6 für A bzw. 13.6 für BI in Toluol und einer mittleren Teilchengröße d₅₀ von 93nm für A und 443nm für BI..
- AB-ii:: ein acrylatkautschukmodifiziertes Styrol-Acrylnitril-Copolymer (ASA), dessen Synthese in der EP-A-450 485 als erfindungsgemäßes Beispiel beschrieben ist, wobei Komponente BI aus EP-A-450 485 zu 30 Teilen, sowie Komponente C dementsprechend zu 70 Teilen. Komponente B wurde anstelle von 1.6 Teilen bzw. 1.0 Teilen Tricyclodecenylacrylat mit 5 Teilen Dihydodicyclopentadienylacrylat (CAS Nummer 12542-30-2) synthetisiert. Es ergab sich ein Quellungsindex von 5.9 für BI in Toluol mit einer mittleren Teilchengröße d₅₀ von 653nm.
- V-AB-iii:: eine von AB-i abweichende Formmasse, wobei 35 Teile eines Acrylat-Styrol-Acrylnitril (ASA)-Pfropfpolymerisat mit einer mittleren Teilchengröße d₅₀ von 1207 nm und einem Quellungsindex von 9.1 in einem Styrol-Acrylnitril Copolymer mit einem MW von 104.000 dispergiert vorliegen.
- V-AB-iV:: ein von LyondeIIBasell Industries AF S.C.A. kommerziell verfügbares Polypropylen Moplen® EP240P.
- V-AB-V:: ein von der BASF SE unter der Bezeichnung Polystyrol® 158K kommerziell vertriebenes Polystyrol.

Als Komponente C (bzw. V-C zum Vergleich) wurde eingesetzt:
- C-i:: eine Verbindung der Formel (I), kommerziell vertrieben von BASF SE unter der Bezeichnung Tinuvin^{®} 770.
- V-C-ii:: eine Verbindung der Formel (VII), kommerziell vertrieben von BASF SE unter der Bezeichnung Tinuvin^{®} 765.

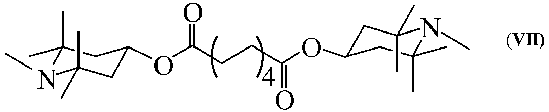

Als Komponente D (bzw. V-D zum Vergleich) wurde eingesetzt:
- D-i:: eine Verbindung der Formel (II), kommerziell vertrieben von Cytec Industries unter der Bezeichnung Cyasorb^{®} 3853.

Als Komponente E (bzw. V-E zum Vergleich) wurde eingesetzt:
- E-i:: eine Verbindung der Formel (III), kommerziell vertrieben von BASF SE unter der Bezeichnung Chimassorb^{®} 944.
- E-ii:: eine Verbindung der Formel (V), kommerziell vertrieben von Cytec industries unter der Bezeichnung Cyasorb^{®} UV-3346.
- V-E-iii:: ein hochmolekulares sterisch gehindertes Amin der Formel (VIII), CAS-Nummer 106990-43-6, kommerziell vertrieben von SABO S.p.A. unter der Bezeichnung Sabostab^{®} 119.

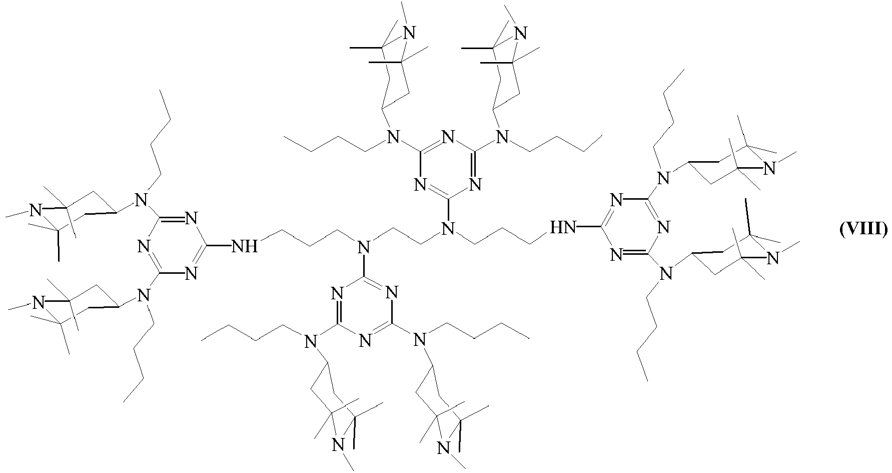

Als Komponente F (bzw. V-F zum Vergleich) wurde eingesetzt:
F-i: Ruß Typ Black Pearls 880, kommerziell vertrieben von Cabot Corporation

### Herstellung der Formmassen und Formkörper:

Die Komponenten A, B, C und D (jeweilige Gewichtsteile siehe Tabelle 1) wurden in einem Zweischneckenextruder ZSK30 von Fa. Werner & Pfleiderer bei 250°C homogenisiert und in ein Wasserbad extrudiert. Die Extrudate wurden granuliert und getrocknet. Aus den Granulaten stellte man auf einer Spritzgussmaschine bei 260°C Schmelzetemperatur und 60°C Werkzeugoberflächentemperatur Prüfkörper her und bestimmte die in Tabelle 1 genannten Eigenschaften.

**Tabelle 1: Zusammensetzung und Eigenschaften der Formmassen (vorangestelltes V: zum Vergleich)**

| Beispiel | 1 | 2 | 3 | V-4 | V-5 | V-6 | V-7 | V-8 | V-9 | V-10 |
|---|---|---|---|---|---|---|---|---|---|---|
| Zusammensetzung | | | | | | | | | | |
| AB-i | 98 | 98 | 98 | - | - | - | - | - | 98 | 98 |
| V-AB-ii | - | - | - | 98 | - | - | - | - | - | - |
| V-AB-iii | - | - | - | - | 98 | - | - | - | - | - |
| V-AB-iv | - | - | - | - | - | 98,8 | - | - | - | - |
| V-AB-v | - | - | - | - | - | - | 98,7 5 | 98 | - | - |
| C-i | 0,5 | 0,5 | 0,5 | 0,5 | 0,5 | 0,05 | 0,05 | 0.5 | 0 | 0,5 |
| V-C-ii | - | - | - | - | - | - | - | - | 0.5 | - |
| D-i | 0,5 | 0,25 | 0,25 | 0,25 | 0,25 | 0,05 | 0,1 | 0,25 | 0,5 | - |
| E-i | - | 0,25 | - | - | 0,25 | 0,1 | 0,1 | 0,25 | - | - |
| E-i | - | - | 0,25 | 0,25 | - | - | - | - | - | - |
| V-E-iii | - | - | - | - | - | - | - | - | - | 0,5 |
| F-i | 1 | 1 | 1 | 1 | 1 | 1 | 1 | 1 | 1 | 1 |

| Eigenschaften | | | | | | | | | | |
|---|---|---|---|---|---|---|---|---|---|---|
| Glanz nach | | | | | | | | | | |
| 0 h BWZ | 96 | 97 | 99 | 97 | 85 | 97 | 102 | 101 | 96 | 95 |
| 1500 h BWZ | 84 | 88 | 85 | 78 | 69 | 82 | 2 | 4 | 62 | 65 |
| 2500 h BWZ | 78 | 82 | 81 | 62 | 54 | 68 | 0,5 | 0.7 | 23 | 34 |
| Durchstoß nach | | | | | | | | | | |
| 0 h BWZ | 30,2 | 29,7 | 29,8 | 8,3 | 29,3 | 4,1 | 1,1 | 1,3 | 31,3 | 31,7 |
| 1500 h BWZ | 11,7 | 13,4 | 12,6 | 2 | 5,1 | 1,4 | 0,5 | 0,8 | 4,7 | 7,9 |
| 2500 h BWZ | 7,3 | 8,5 | 8,4 | 0,5 | 0,4 | 1,1 | 0,3 | 0,4 | 3,3 | 4,5 |

Die Beispiele belegen, daß die erfindungsgemäßen Formmassen gegenüber den bekannten stabilisierten Formmassen eine nochmals verbesserte Witterungsbeständigkeit, d.h. eine nochmals verbesserte Wärme-, Licht-, und/oder Sauerstoffbeständigkeit, aufweisen. Die Zusammensetzung ist in Gewichtsanteilen gegeben und die Abkürzung BWZ steht für Bewitterungszeit.

## Patentansprüche

1. Thermoplastische Formmasse, enthaltend:
a) 3 bis 94,6 Gew.-% eines oder mehrerer Styrolcopolymere als Komponente A, **dadurch gekennzeichnet, dass** man als Komponente A ein Copolymerisat aus Acrylnitril, Styrol und/oder α-Methylstyrol, Phenylmaleinimid, Methacrylsäuremethylester oder deren Mischungen einsetzt,
b) 5 bis 95,2 Gew.-% eines oder mehrerer schlagzäh-modifizierender Propfkautschuke ohne olefinische Doppelbindung in der Kautschukphase als Komponente B, **dadurch gekennzeichnet, dass** der Quellungsindex der Komponente B in Toluol 6 bis 20 beträgt, und **dadurch gekennzeichnet, dass** der mittlere Teilchendurchmesser von Komponente B, gemessen mittels HDC, zwischen 50 bis 1200 nm liegt,
c) 0,2 bis 0,9 Gew.-% einer Verbindung der Formel (I) als Komponente C: 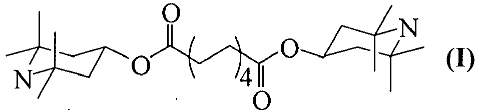
d) 0 bis 0,9 Gew.-% eines Gemisches der Formel (II) als Komponente D: 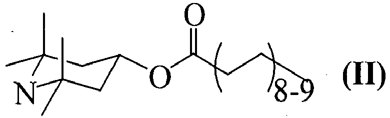
e) 0 bis 0,5 Gew.-% einer Verbindung der Formel (III) als Komponente E: 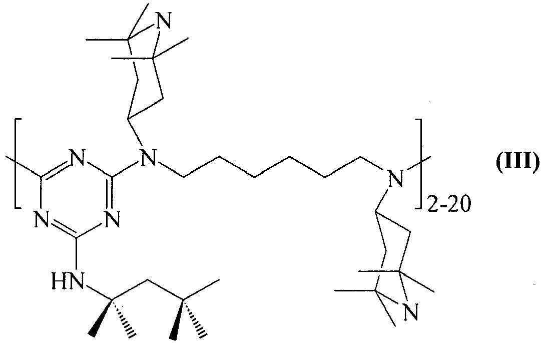 oder 0 bis 0,5 Gew.-% einer Verbindung der Formel (IV): 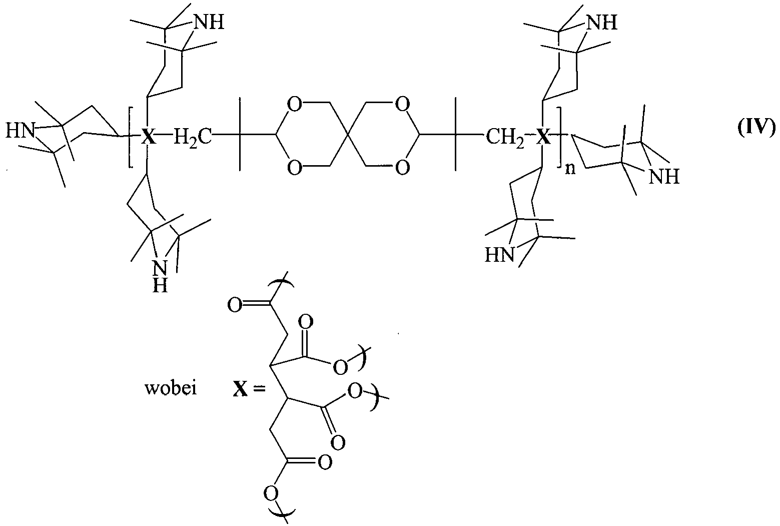 oder 0 bis 0,5 Gew.-% einer Verbindung der Formel (V): 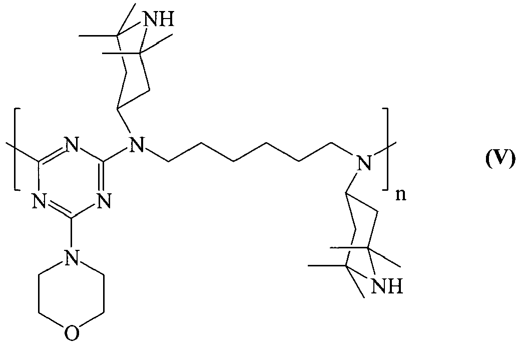 oder 0 bis 0,5 Gew.-% einer Verbindung der Formel (VI): 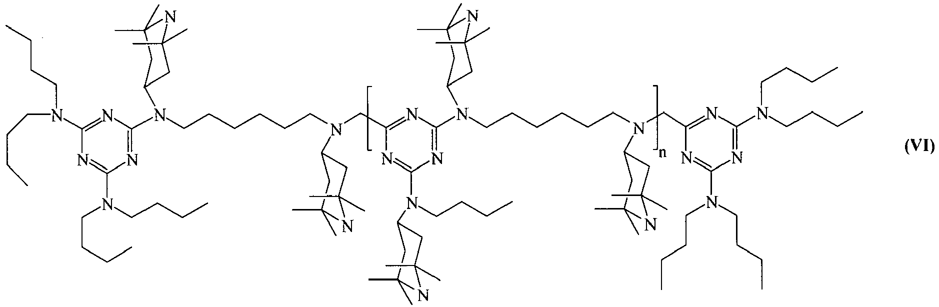
f) 0 bis 10 Gew.-% eines oder mehrerer Zusatzstoffe, die von den Komponenten C,D und E verschieden sind, als Komponente F, und
g) 0 bis 40 Gew.-% faser- oder teilchenförmiger Füllstoffe als Komponente G,
mit der Maßgabe, wenn Komponente D 0 Gew.-% beträgt, die Komponente E 0,01 bis 0,5 Gew.-%, bevorzugt 0,1 bis 0,5 Gew.-%, besonders bevorzugt 0,2 bis 0,5 Gew.-% eine oder mehrerer der Verbindungen III, IV, V oder VI beträgt, wobei die Gew.-% jeweils auf das Gesamtgewicht der Komponenten A bis G bezogen sind und zusammen 100 Gew.-% ergeben.

2. Thermoplastische Formmassen nach Anspruch 1, **dadurch gekennzeichnet, dass** man als Komponente B ein Gemisch aus einem Acrylat-Styrol-Acrylnitril (ASA)-Pfropfpolymerisat einsetzt, das 55 bis 80 Gew.-% bezogen auf B eines elastomer vernetzten Acrylester-Polymerisat B1 und 45 bis 25 Gew.-% bezogen auf B einer Propfhülle B2 aus einem vinylaromatischen Monomeren und einem oder mehreren polaren, copolymerisierbaren, ethylenisch ungesättigten Monomeren, gegebenenfalls einem weiteren copolymerisierbaren, ethylenisch ungesättigten Monomer im Gewichtsverhältnis 80:20 bis 65:35 enthält.

3. Thermoplastische Formmasse nach Anspruch 1 oder 2, **dadurch gekennzeichnet, dass** B1 zu 0,01 bis 20 Gew.-%, vorzugsweise 0,1 bis 5 Gew.-%, aus einem vernetzenden Monomeren, vorzugsweise Butylendiacrylat, Divinylbenzol, Butandioldimethacrylat, Trimethylolpropantri(meth)acrylat, Diallylmethacrylat, Diallylmaleat, Diallylfumarat, Triallylmethacrylat, Triallylisocyanurat, besonders bevorzugt Diallylphthalat, Allylmethacrylat und/oder Dihydrodicyclopentadienylacrylat besteht.

4. Thermoplastische Formmassen nach einem der Ansprüche 1 bis 3, **dadurch gekennzeichnet, dass** Komponente A 0-20 Gew-% Polymethylmethacrylat enthalten kann.

5. Thermoplastische Formmassen nach einem der Ansprüche 1 bis 4, **dadurch gekennzeichnet, dass** man die Komponenten C zu D im Gewichtsverhältnis von 3:1 bis 1:1 und Komponenten D zu E im Gewichtsverhältnis von 2:1 bis 0,5:1 einsetzt.

6. Thermoplastische Formmassen nach einem der Ansprüche 1 bis 5, **dadurch gekennzeichnet, dass** die Formmassen 0 bis 1,5 Gew.-% Phthalsäureester oder Adipinsäureester enthalten.

7. Thermoplastische Formmasse nach einem der Ansprüche 1 bis 6, **dadurch gekennzeichnet, dass** die Komponente B1 2 bis 99 Gew.-% Butylacrylat enthält.

8. Thermoplastische Formmassen nach einem der Ansprüche 1 bis 7, **dadurch gekennzeichnet, dass** man als vinylaromatische Komponente in B2 Styrol oder α-Methylstyrol einsetzt.

9. Thermoplastische Formmassen nach einem der Ansprüche 1 bis 8, **dadurch gekennzeichnet, dass** man als ethylenisch ungesättige Komponente in B2 Acrylnitril und/oder Alkylmethacrylate und/oder Alkylacrylate mit C₁- bis C₈-Alkylresten einsetzt.

10. Thermoplastische Formmassen nach einem der Ansprüche 1 bis 9, **dadurch gekennzeichnet, dass** man die Komponente B monomodal oder bimodal einsetzt.

11. Verfahren zur Herstellung von thermoplastischen Formmassen nach einem der Ansprüche 1 bis 10, **dadurch gekennzeichnet, dass** man die Komponenten A bis F bei Temperaturen von 100 bis 300°C und einem Druck von 1 bis 50 bar in beliebiger Reihenfolge miteinander vermischt, anschließend knetet und extrudiert.

12. Verfahren zur Herstellung von thermoplastischen Formmassen nach Anspruch 11, **dadurch gekennzeichnet, dass** man zunächst ein Teil der Komponente B mit einem Teil der Komponente A zu einem Masterbatch im Verhältnis 1:1 bis 1:2 vormischt und anschließend mit weiteren Komponenten A-F zu der thermoplastischen Formmasse vermischt.

13. Verwendung von thermoplastischen Formmassen nach einem der Ansprüche 1 bis 10 zur Herstellung von Formkörpern, Folien oder Fasern.

14. Verwendung der thermoplastischen Formmassen nach Anspruch 13 zur Herstellung von Formkörpern für KFZ-Bauteile oder Teile von Elektronikgeräten.

15. Formkörper, Fasern oder Folien aus einer thermoplastischen Formmasse nach einem der Ansprüche 1 bis 10.

## Claims

1. A thermoplastic molding composition comprising:
a) from 3 to 94.6% by weight of one or more styrene copolymers as component A, which uses, as component A, a copolymer of acrylonitrile, styrene, and/or α-methylstyrene, phenylmaleimide, methyl methacrylate, or a mixture of these,
b) from 5 to 95.2% by weight of one or more impact-modifying graft rubbers having no olefinic double bond in the rubber phase as component B, wherein the swelling index of component B is from 6 to 20 in toluene, and wherein the average particle diameter of component B, measured by HDC, is from 50 to 1200 nm,
c) from 0.2 to 0.9% by weight of a compound of the formula (I) as component C: 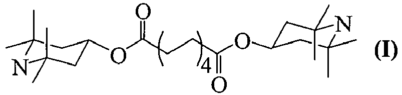
d) from 0 to 0.9% by weight of a mixture of the formula (II) as component D: 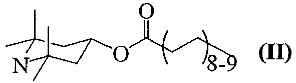
e) from 0 to 0.5% by weight of a compound of the formula (III) as component E: 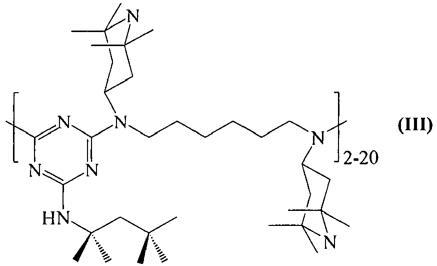 or from 0 to 0.5% by weight of a compound of the formula (IV): 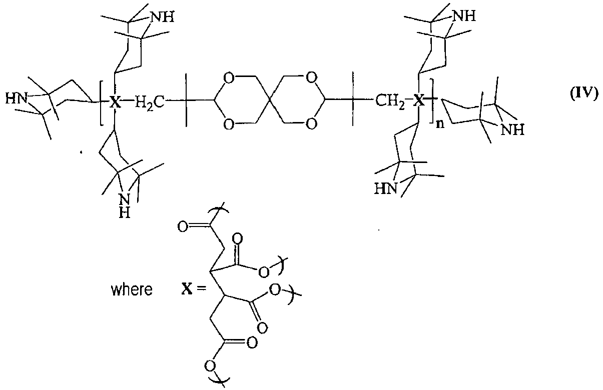 or from 0 to 0.5% by weight of a compound of the formula (V): 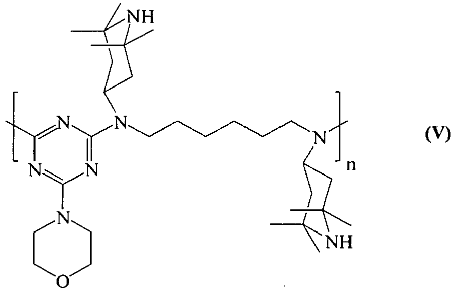 or from 0 to 0.5% by weight of a compound of the formula (VI): 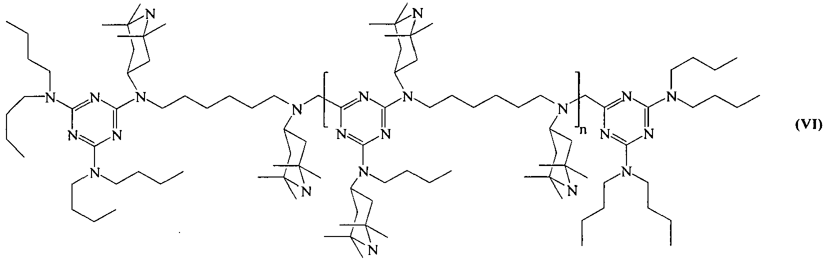
f) from 0 to 10% by weight of one or more additives, where these differ from components C, D, and E, as component F, and
g) from 0 to 40% by weight of fibrous or particulate fillers as component G, with the proviso that if the amount of component D is 0% by weight the amount of component E is from 0.01 to 0.5% by weight, preferably from 0.1 to 0.5% by weight, particularly preferably from 0.2 to 0.5% by weight, of one or more of the compounds III, IV, V, or VI, where each of the % by weight values is based on the sum weight of components A to G, and the sum of these values is 100% by weight.

2. The thermoplastic molding composition according to claim 1, which uses, as component B, a mixture made of an acrylate-styrene-acrylonitrile (ASA) graft polymer which comprises
from 55 to 80% by weight, based on B, of an elastomerically crosslinked acrylate polymer B1 and comprises from 45 to 25% by weight, based on B, of a graft shell B2 made of a vinylaromatic monomer and made of one or more polar, copolymerizable, ethylenically unsaturated monomers, and optionally made of a further copolymerizable, ethylenically unsaturated monomer, in a ratio by weight of from 80:20 to 65:35.

3. The thermoplastic molding composition according to claim 1 or 2, wherein B1 is composed of from 0.01 to 20% by weight, preferably from 0.1 to 5% by weight, of a crosslinking monomer, preferably butylene diacrylate, divinylbenzene, butanediol dimethacrylate, trimethylolpropane tri(meth)acrylate, diallyl methacrylate, diallyl maleate, diallyl fumarate, triallyl methacrylate, triallyl isocyanurate, particularly preferably diallyl phthalate, allyl methacrylate and/or dihydrodicyclopentadienyl acrylate.

4. The thermoplastic molding composition according to any of claims 1 to 3, wherein component A can comprise from 0 to 20% by weight of polymethyl methacrylate.

5. The thermoplastic molding composition according to any of claims 1 to 4, which uses components C and D in a ratio by weight of from 3:1 to 1:1 and components D and E in a ratio by weight of from 2:1 to 0.5:1.

6. The thermoplastic molding composition according to any of claims 1 to 5, which comprises from 0 to 1.5% by weight of phthalate or adipate.

7. The thermoplastic molding composition according to any of claims 1 to 6, wherein component B1 comprises from 2 to 99% by weight of butyl acrylate.

8. The thermoplastic molding composition according to any of claims 1 to 7, which uses styrene or α-methylstyrene as vinylaromatic component in B2.

9. The thermoplastic molding composition according to any of claims 1 to 8, which uses, as ethylenically unsaturated component in B2, acrylonitrile and/or alkyl methacrylates and/or alkyl acrylates having C₁-C₈-alkyl radicals.

10. The thermoplastic molding composition according to any of claims 1 to 9, which uses component B in monomodal or bimodal form.

11. A process for producing thermoplastic molding compositions according to any of claims 1 to 10, which comprises mixing components A to F with one another at temperatures of from 100 to 300°C and at a pressure of from 1 to 50 bar in any desired sequence, and then kneading and extruding the material.

12. The process for producing thermoplastic molding compositions according to claim 11, wherein a portion of component B is first premixed with a portion of component A to give a masterbatch in a ratio of from 1:1 to 1:2, and then the material is mixed with further components A to F to give the thermoplastic molding composition.

13. The use of thermoplastic molding compositions according to any of claims 1 to 10 for producing moldings, foils, or fibers.

14. The use of the thermoplastic molding compositions according to claim 13 for producing moldings for motor-vehicle components or for parts of electronic equipment.

15. A molding, fiber, or foil made of a thermoplastic molding composition according to any of claims 1 to 10.

## Revendications

1. Compositions de moulage thermoplastiques comprenant :
a) en tant que composant A, de 3 à 94,6% en poids d'un ou plusieurs copolymères de styrène, **caractérisées en ce que** l'on utilise en tant que composant A un copolymère d'acrylonitrile, de styrène et/ou d'α-méthylstyrène, d'une phénylmaléimide, d'un ester méthylique d'acide méthacrylique ou de leurs mélanges,
b) en tant que composant B, de 5 à 95,2% en poids d'un ou plusieurs caoutchoucs greffés modifiés pour résister au choc, exempts de double liaison oléfinique dans la phase caoutchouc, **caractérisées en ce que** l'indice de gonflement du composant B dans le toluène est de 6 à 20 et **caractérisées en ce que** le diamètre moyen des particules du composant B, déterminé par HDC, est compris entre 50 à 1200 nm
c) en tant que composant C, de 0,2 à 0,9% en poids d'un composé de formule (I): 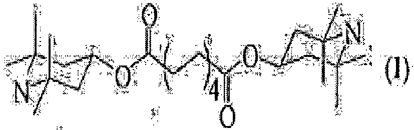
d) en tant que composant D, de 0 à 0,9% en poids d'un mélange de formule (II) 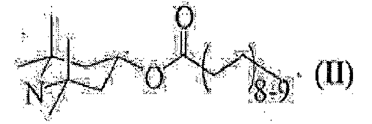
e) en tant que composant E, de 0 à 0,5% en poids d'un composé de formule (III) 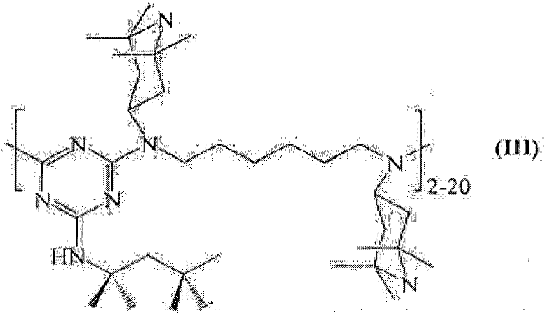 ou de 0 à 0,5% en poids d'un composé de formule (IV): 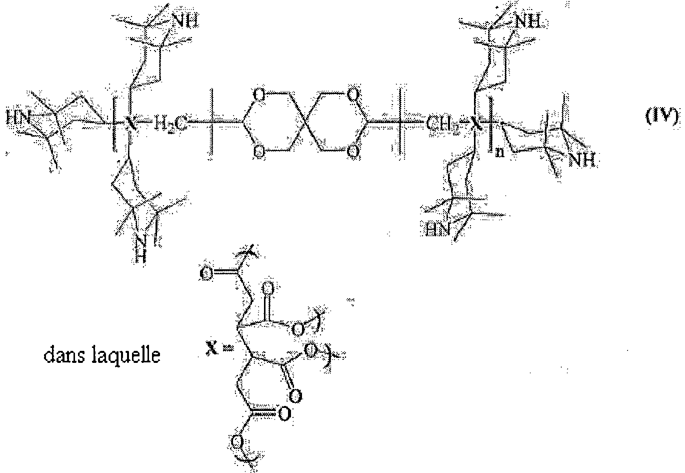 ou de 0 à 0,5 en poids d'un composé de formule (V): 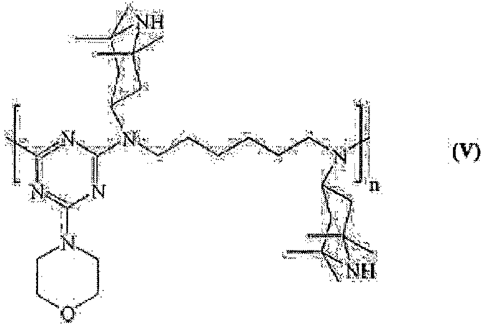 ou de 0 à 0,5 en poids d'un composé de formule (VI): 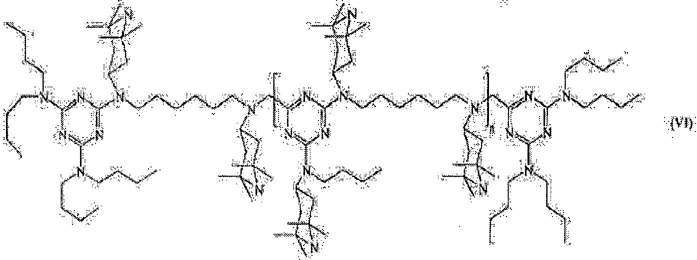
f) en tant que composant F, de 0 à 10% en poids, d'un ou plusieurs additifs différant des composants C, D et E, et
g) en tant que composant G, de 0 à 40% en poids de charges formées de fibres ou de particules,
avec la condition que lorsque aucun composant D est présent, le composant E contienne de 0,01 à 0,5% en poids, de préférence de 0,1 à 0,5% en poids, plus particulièrement de préférence de 0,2 à 0,5% en poids d'un ou plusieurs des composés III, IV, V ou VI, et ceci dans des proportions pondérales étant dans tous les cas exprimées par rapport au poids total des composants A à G et formant ensemble totalement 100% en poids.

2. Compositions de moulage thermoplastiques selon la revendications 1, **caractérisées en ce que** en tant que composant B, on utilise un mélange d'un polymère greffé acrylate-styrène-acrylonitrile (ASA) qui contient 55 à 80% en poids par rapport à B d'un polymère B1 d'ester acrylique réticulé élastomère et de 45 à 25% en poids par rapport à B d'une enveloppe greffée B2 de monomères vinylaromatiques et d'un ou plusieurs monomères éthyléniquement insaturés copolymérisables polaires et le cas échéant un autre monomère éthyléniquement insaturé copolymérisable en un rapport pondéral de 80/20 à 65/35.

3. Compositions de moulage thermoplastiques selon l'une des revendications 1 ou 2, **caractérisées en ce que** B1 est formé de 0,01 à 20% en poids, de préférence de 0,1 à 5% en poids d'un monomère réticulant, consistant de préférence en butylènediacrylate, divinylbenzène, butandioldiméthacrylate, méthylolpropanetri(méth)acrylate, diallylméthacrylate, diallylmaléate, diallyl-fumarate, triallylméthacrylate, triallylisocyanurate, et de façon tout particulièrement préférée consistant en diallylphtalate, allylméthacrylate et/ou d'acrylate de dihydrodicyclo-pentadiényle.

4. Compositions de moulage thermoplastiques selon une quelconque des revendications 1 à 3, **caractérisées en ce que** le composant A peut contenir de 0 à 20% en poids de polyméthacrylate de méthyle.

5. Compositions de moulage thermoplastiques selon l'une quelconque des revendications 1 à 4, **caractérisées en ce que** les composants C à D sont utilisés dans un rapport pondéral de 3/1 à 1/1 et les composants D à E dans un rapport pondéral de 2/1 à 0,5/1.

6. Compositions de moulage thermoplastiques selon l'une quelconque des revendications 1 à 5, **caractérisées en ce qu'**elles contiennent de 0 à 1,5% en poids d'un ester d'acide phtalique ou d'un ester d'acide adipique.

7. Compositions de moulage thermoplastiques selon l'une quelconque des revendications 1 à 6, **caractérisées en ce que** le composant B1 contient de 2 à 99% en poids d'acrylate de butyle.

8. Compositions de moulage thermoplastiques selon l'une quelconque des revendications 1 à 7, **caractérisées en ce que** l'on utilise comme composant vinylaromatique B2, le styrène ou l'α-méthylstyrène.

9. Compositions de moulage thermoplastiques selon l'une quelconque des revendications 1 à 8, **caractérisées en ce qu'**en tant que composant à insaturation éthylénique B2 est utilisé l'acrylonitrile et/ou des alkylméthacrylates et/ou des alkylacrylates comportant des groupes alkyl en C₁ à C₈.

10. Compositions de moulage thermoplastiques selon l'une quelconque des revendications 1 à 9, **caractérisées en ce que** le composant B est utilisé sous forme monomodale ou bimodale.

11. Procédé pour la production de compositions de moulage thermoplastiques selon une quelconque des revendications 1 à 10, **caractérisé en ce que** l'on mélange entre eux, sans ordre défini, les composants A à F à des températures de 100 à 300°C et sous une pression de 1 à 50 bars, puis pétrit et extrude.

12. Procédé pour la production de compositions de moulage thermoplastiques selon la revendication 11, **caractérisé en ce que** l'on prémélange tout d'abord une partie du composant B avec une partie du composant A en un rapport de 1:1 à 1:2 pour former un mélange-maître puis ensuite combine ce mélange-maître avec d'autres composants A à F pour former la composition de moulage.

13. Utilisation des compositions de moulage thermoplastiques selon l'une quelconque des revendications 1 à 10, pour la production de pièces moulées, de feuilles ou de fibres.

14. Utilisation des compositions de moulage thermoplastiques selon la revendication 13, pour la fabrication de corps moulés pour des pièces de véhicules automobiles ou des pièces d'équipement électronique.

15. Pièces moulées, fibres ou films constitués d'une composition de moulage thermoplastique selon l'une quelconque des revendications 1 à 10.
